# EUROPEAN PATENT APPLICATION

(11) **EP 4 498 055 A1**
(43) Date of publication of application: **29.01.2025**
(21) Application number: 22933263.0
(22) Date of filing: 22.03.2022
(51) Int. Cl.: G01L 3/10

(54) **SENSOR DEVICE**

(71) Applicant: JTEKT Corporation, Kariya-shi, Aichi 448-8652 (JP)
(72) Inventor: TADA Takeshi, Kariya-shi, Aichi 448-8652 (JP); OKADA Yuuki, Kariya-shi, Aichi 448-8652 (JP); KUWAHARA Yuya, Kariya-shi, Aichi 448-8652 (JP)
(74) Representative: Winter, Brandl - Partnerschaft mbB
(86) International application number: PCT/JP2022/013157
(87) International publication number: WO 2023/181116

(57) **Abstract**

A sensor device includes a magnetic flux collector assembly (31) having a first magnetic flux collecting member (41), a second magnetic flux collecting member (42), and a resin holder (43). The first magnetic flux collecting member (41) has a first main body portion (44) and first claw portions (45a, 45b) that are bent from the first main body portion (44) and that protrude toward an outer peripheral side of the resin holder (43). The second magnetic flux collecting member (42) has a second main body portion (46) and second claw portions (47a, 47b) that are bent from the second main body portion (46) and that protrude toward the outer peripheral side of the resin holder (43). The resin holder (43) holds the first magnetic flux collecting member (41) and the second magnetic flux collecting member (42) such that at least linking portions between the first main body portion (44) and the first claw portions (45a, 45b), and linking portions between the second main body portion (46) and the second claw portions (47a, 47b), are not exposed on an inner peripheral face of the resin holder (43).

## Description

### TECHNICAL FIELD

The present disclosure relates to a sensor device.

### BACKGROUND ART

Conventionally, as described in Patent Document 1 for example, there is known a sensor device that is provided on a rotating shaft including an input shaft and an output shaft linked to the input shaft via a torsion bar, and that detects torque applied to the rotating shaft.

The sensor device according to Patent Document 1 includes a sensor magnet that rotates integrally with the input shaft, a pair of yoke cores that rotate integrally with the output shaft, a magnetic flux collector assembly having a pair of magnetic flux collector rings, and a magnetic sensor that generates a signal in accordance with magnetic flux flowing through the pair of magnetic flux collector rings. The magnetic flux collector assembly includes a resin holder that is tubular, and that holds the pair of magnetic flux collector rings. Each magnetic flux collector ring has an annular portion, and claw portions that are bent from the annular portion and protrude to an outer peripheral side thereof. Each magnetic flux collector ring is held by the resin holder such that the annular portion is exposed to an inner peripheral face of the resin holder and also the claw portions protrude toward an outer peripheral side of the resin holder. The magnetic sensor is disposed between the claw portions of the magnetic flux collecting member, on the outer peripheral side of the resin holder. Accordingly, even in a case in which liquid such as water seeps into an inner peripheral side of the resin holder, the liquid does not readily adhere directly to the magnetic sensor.

### Related Art Documents

### Patent Documents

Patent Document 1: Japanese Unexamined Patent Application Publication No. 2021-25819 (JP 2021-25819 A)

### SUMMARY OF THE INVENTION

### Problem to be Solved by the Invention

Even in the sensor device configured as described in Patent Document 1, there is still a concern that liquid may reach the magnetic sensor by way of interfaces of the magnetic flux collector rings and the resin holder. In particular, when a clearance is present between the magnetic flux collector rings and the resin holder on the inner peripheral face of the resin holder, the liquid will reach the magnetic sensor more readily.

### Means for Solving the Problem

A sensor device according to an aspect of the present disclosure includes a sensor magnet configured to rotate integrally with a first shaft, a first yoke core and a second yoke core configured to rotate integrally with a second shaft linked to the first shaft via a torsion bar, a magnetic flux collector assembly including a first magnetic flux collecting member disposed with a gap as to the first yoke core, a second magnetic flux collecting member disposed with a gap as to the second yoke core, and a resin holder that is tubular, and a magnetic sensor that generates a signal in accordance with a magnetic flux flowing through the first magnetic flux collecting member and the second magnetic flux collecting member. The first magnetic flux collecting member has a first main body portion facing the first yoke core and a first claw portion that is bent from the first main body portion and that protrudes toward an outer peripheral side of the resin holder. The second magnetic flux collecting member has a second main body portion facing the second yoke core and a second claw portion that is bent from the second main body portion and that protrudes toward the outer peripheral side of the resin holder. The magnetic sensor is disposed on the outer peripheral side of the resin holder, between the first claw portion and the second claw portion. The resin holder holds the first magnetic flux collecting member and the second magnetic flux collecting member such that at least a linking portion between the first main body portion and the first claw portion, and a linking portion between the second main body portion and the second claw portion, are not exposed on an inner peripheral face of the resin holder.

### BRIEF DESCRIPTION OF THE DRAWINGS

[FIG. 1] FIG. 1 is an exploded perspective view of a sensor device according to an embodiment.
[FIG. 2] FIG. 2 is a partial sectional view taken along an axial direction of the sensor device in FIG. 1.
[FIG. 3] FIG. 3 is a perspective view of a magnetic flux collector assembly making up the sensor device in FIG. 1.
[FIG. 4] FIG. 4 is a perspective view of a first magnetic flux collecting member and a second magnetic flux collecting member making up the magnetic flux collector assembly in FIG. 3.
[FIG. 5A] FIG. 5A is an enlarged cross-sectional view illustrating an example of a linking portion between a first main body portion and a first claw portion in a state in which molten resin is injected at the time of insert molding of a resin holder that makes up the magnetic flux collector assembly in FIG. 3.
[FIG. 5B] FIG. 5B is an enlarged cross-sectional view illustrating an example of the linking portion between the first main body portion and the first claw portion in a state in which the molten resin has solidified at the time of insert molding of the resin holder that makes up the magnetic flux collector assembly in FIG. 3.
[FIG. 6] FIG. 6 is a plan view of the magnetic flux collector assembly making up the sensor device in FIG. 1.
[FIG. 7] FIG. 7 is a perspective view of the magnetic flux collector assembly making up the sensor device in FIG. 1, as viewed from a different viewpoint from that in FIG. 3.

### MODES FOR CARRYING OUT THE INVENTION

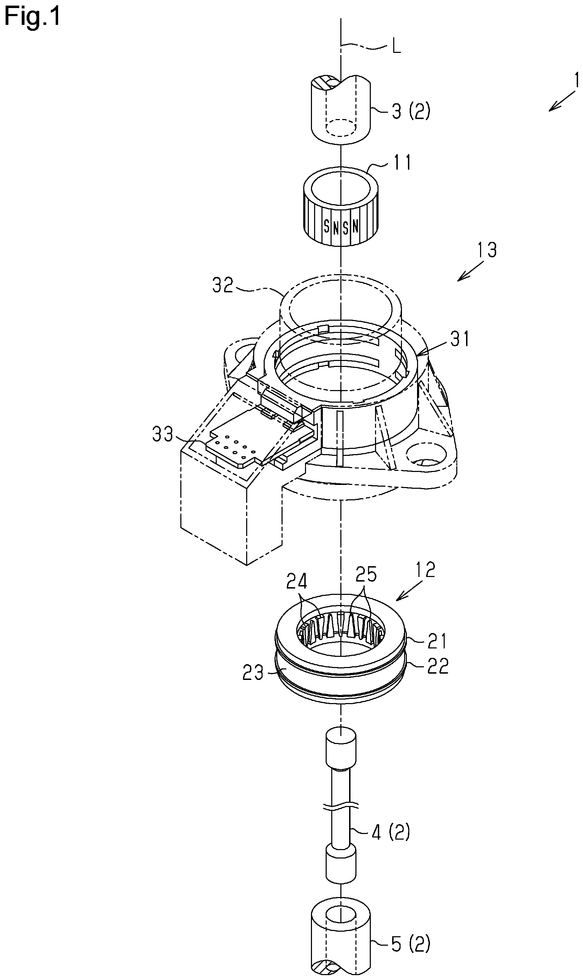

An embodiment of a sensor device will be described below with reference to the drawings. As illustrated in FIG. 1, a sensor device 1 is provided on an outer periphery of a rotating shaft 2. The rotating shaft 2 includes an input shaft 3 which is a first shaft, a torsion bar 4, and an output shaft 5 which is a second shaft. The input shaft 3 and the output shaft 5 are linked to each other via the torsion bar 4. The input shaft 3, the torsion bar 4, and the output shaft 5 are situated on the same axial line L. The rotating shaft 2 is, for example, a pinion shaft of a rack-and-pinion mechanism that makes up a steering device of a vehicle. A steering wheel is linked to the upper end portion of the pinion shaft via an intermediate shaft and a column shaft.

The sensor device 1 detects torque applied to the rotating shaft 2 through operation of the steering wheel by a driver. The sensor device 1 includes a sensor magnet 11, a magnetic yoke assembly 12, and a fixing unit 13.

The sensor magnet 11 is a ring magnet that is tubular. The term "tubular" as used in the present specification can refer to any shape that is generally tubular, and also includes a tubular shape formed by combining a plurality of parts and a tubular shape having a cut or the like in a portion thereof, such as in a C-shape. The "tubular" shape includes, but is not limited to, shapes that are circular, elliptical, and polygonal with sharp or rounded corners as viewed in an axial direction. In the present embodiment, the sensor magnet 11 has a circular shape as viewed in the axial direction.

The sensor magnet 11 is magnetized in the radial direction, such that magnetic poles of different polarities are disposed alternately in a circumferential direction. The sensor magnet 11 is fixed to an outer peripheral face of the input shaft 3 via a holder that is omitted from illustration, or directly, so as to be integrally rotatable therewith. In another embodiment, the sensor magnet 11 may be a plurality of magnets that are plate shaped.

The magnetic yoke assembly 12 includes a first yoke core 21, a second yoke core 22, and a yoke holder 23 that holds the first yoke core 21 and the second yoke core 22. The magnetic yoke assembly 12 is disposed on an outer peripheral side of the sensor magnet 11 with a gap therebetween. The magnetic yoke assembly 12 is fixed to an outer periphery of the output shaft 5 so as to be integrally rotatable therewith.

Each of the first yoke core 21 and the second yoke core 22 is made of a magnetic material and has an annular shape. The term "annular" as used in the present specification can refer to any shape that is generally annular, and also includes an annular shape formed by combining a plurality of parts and an annular shape having a cut or the like in a portion thereof, such as in a C-shape. The "annular" shape includes, but is not limited to, shapes that are circular, elliptical, and polygonal with sharp or rounded corners as viewed in the axial direction. In the present embodiment, each of the first yoke core 21 and the second yoke core 22 has a circular shape as viewed in the axial direction.

The first yoke core 21 and the second yoke core 22 are disposed along the axial line L with a gap therebetween. The first yoke core 21 and the second yoke core 22 each have a plurality of teeth portions 24 and 25. The teeth portions 24 and 25 protrude in directions toward each other. The teeth portions 24 are provided on the first yoke core 21 at equal intervals in the circumferential direction, and the teeth portions 25 are provided on the second yoke core 22 at equal intervals in the circumferential direction. The teeth portions 24 and the teeth portions 25 are disposed alternately in the circumferential direction.

The yoke holder 23 is made of a resin material, for example, and has a tubular shape. In the present embodiment, the yoke holder 23 has a circular shape as viewed in the axial direction. The axial direction of the yoke holder 23 agrees with a direction along the axial line L.

The yoke holder 23 is a resin molded article formed by insert molding in which the first yoke core 21 and the second yoke core 22 are inserts. In other words, the yoke holder 23 is the portion of the magnetic yoke assembly 12 that is made of a resin material. The yoke holder 23 holds the first yoke core 21 and the second yoke core 22 on the axial line L. Specifically, the yoke holder 23 holds the first yoke core 21 and the second yoke core 22 such that inner side faces of the teeth portions 24 and 25 are exposed to an inner peripheral side of the yoke holder 23.

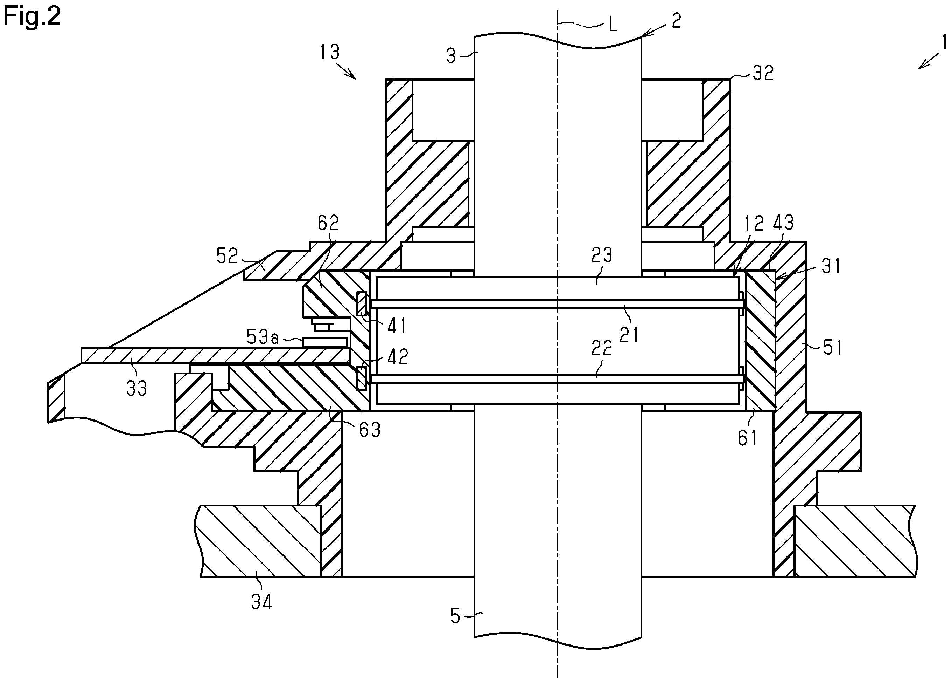

As illustrated in FIG. 1 and FIG. 2, the fixing unit 13 includes a magnetic flux collector assembly 31, an outer case 32 that holds the magnetic flux collector assembly 31, and a circuit board 33. The fixing unit 13 is attached to a housing 34 which rotatably supports the rotating shaft 2. The housing 34 is, for example, a gear housing that accommodates the rack-and-pinion mechanism.

As illustrated in FIG. 2 to FIG. 4, the magnetic flux collector assembly 31 includes a first magnetic flux collecting member 41, a second magnetic flux collecting member 42, and a resin holder 43 that holds the first magnetic flux collecting member 41 and the second magnetic flux collecting member 42. Note that the magnetic flux collector assembly 31 may further include a shielding member disposed on outer peripheral sides of the first magnetic flux collecting member 41 and the second magnetic flux collecting member 42.

The first magnetic flux collecting member 41 is disposed on an outer peripheral side of the first yoke core 21 with a gap therebetween. The first magnetic flux collecting member 41 has a first main body portion 44 that is annular in shape and that faces the first yoke core 21 in the radial direction, and two first claw portions 45a and 45b that bend from the first main body portion 44 and protrude toward an outer peripheral side of the resin holder 43. In the present embodiment, the first main body portion 44 has a C-shape as viewed in the axial direction. The second magnetic flux collecting member 42 is disposed on an outer peripheral side of the second yoke core 22 with a gap therebetween. The second magnetic flux collecting member 42 has a second main body portion 46 that is annular in shape and that faces the second yoke core 22 in the radial direction, and two second claw portions 47a and 47b that bend from the second main body portion 46 and protrude toward the outer peripheral side of the resin holder 43. In the present embodiment, the second main body portion 46 has a C-shape as viewed in the axial direction.

The term "face" as used in the present specification refers to surfaces or members being positioned in front of each other, and includes not only cases when they are positioned completely in front of each other, but also cases when they are positioned partially in front of each other. Also, the term "face" as used in the present specification includes both cases when a member that is different from two portions is interposed between the two portions, and cases when nothing is interposed between the two portions.

The resin holder 43 has a generally tubular shape. The resin holder 43 is a resin molded article formed by insert molding using the first magnetic flux collecting member 41 and the second magnetic flux collecting member 42 as inserts. That is to say, the resin holder 43 is the portion of the magnetic flux collector assembly 31 that is made of a resin material. The first magnetic flux collecting member 41, the second magnetic flux collecting member 42, and the resin holder 43 will be described in detail later.

As illustrated in FIG. 1 and FIG. 2, the outer case 32 is a resin molded article formed by insert molding using the magnetic flux collector assembly 31 as an insert. The outer case 32 has a case main body portion 51 that covers outside of the magnetic flux collector assembly 31, and a flared portion 52 that is flared toward the outer side from the magnetic flux collector assembly 31 in the radial direction. The case main body portion 51 has a generally tubular shape and is disposed on the axial line L. That is to say, the case main body portion 51 is disposed coaxially with the magnetic flux collector assembly 31. The flared portion 52 has, for example, a tubular shape and is flared in a direction perpendicular to the axial line L. In the present embodiment, the flared portion 52 has a rectangular shape as viewed in a direction perpendicular to the axial direction. An opening end of the flared portion 52 is closed by a cover that is omitted from illustration. The outer case 32 is fixed to the housing 34. Accordingly, the inside of the resin holder 43 communicates with inside of the housing 34, via the case main body portion 51.

The circuit board 33 has a shape of a rectangular plate. The circuit board 33 is disposed in the flared portion 52. The circuit board 33 is electrically connected to a terminal that is not illustrated, provided in the flared portion 52. Mounted on the circuit board 33 are two magnetic sensors 53a and 53b. One of the magnetic sensors 53a and 53b is a redundant sensor that is used in a case in which the other fails, or the like. The magnetic sensor 53a is mounted on the circuit board 33 so as to be disposed between the first claw portion 45a of the first magnetic flux collecting member 41 and the second claw portion 47a of the second magnetic flux collecting member 42. The magnetic sensor 53b is mounted on the circuit board 33 so as to be disposed between the first claw portion 45b of the first magnetic flux collecting member 41 and the second claw portion 47b of the second magnetic flux collecting member 42. The magnetic sensors 53a and 53b are for detecting magnetic flux flowing through the first magnetic flux collecting member 41 and the second magnetic flux collecting member 42, and are, for example, Hall sensors or magnetic resistance sensors.

### (Operation of Sensor Device 1)

In the sensor device 1 configured as described above, the sensor magnet 11 rotates integrally with the input shaft 3, and the magnetic yoke assembly 12 rotates integrally with the output shaft 5. When the input shaft 3 and the output shaft 5 rotate relative to each other with twisting of the torsion bar 4 due to steering operations by the driver, the relative positions of the sensor magnet 11 and the magnetic yoke assembly 12 in the circumferential direction change. Thus, the magnetic flux flowing through the first yoke core 21 and the second yoke core 22 changes in accordance with the amount of twisting of the torsion bar 4, i.e., the magnitude of the torque input by the driver. As a result, the magnetic flux flowing through the first magnetic flux collecting member 41 and the second magnetic flux collecting member 42 also changes in accordance with the change in the magnetic flux flowing through the first yoke core 21 and the second yoke core 22. The magnetic sensors 53a and 53b detect the magnetic flux flowing through the first magnetic flux collecting member 41 and the second magnetic flux collecting member 42, and generate signals corresponding to the magnetic flux, i.e., signals indicating the torque.

### (Waterproof Structure of Magnetic Flux Collector Assembly 31)

A case will be assumed in which, for example, a liquid such as water or the like enters the magnetic flux collector assembly 31 through the housing 34. At this time, there is a concern that the liquid may reach the magnetic sensors 53a and 53b via the interface of the first magnetic flux collecting member 41 and the resin holder 43 and/or the interface of the second magnetic flux collecting member 42 and the resin holder 43. In particular, if clearance exists between the first magnetic flux collecting member 41 and the resin holder 43 and/or between the second magnetic flux collecting member 42 and the resin holder 43, on the inner peripheral face of the resin holder 43, the liquid will reach the magnetic sensors 53a and 53b more readily.

Now, insert molding is a molding technology in which injection molding is performed in a state with an insert disposed inside a mold. For example, in the case of the magnetic flux collector assembly 31, injection molding is performed in a state in which the first magnetic flux collecting member 41 and the second magnetic flux collecting member 42 are disposed inside a mold. At this time, the first magnetic flux collecting member 41 and the second magnetic flux collecting member 42 are, except for a portion thereof, enveloped by molten resin injected into the mold. This molten resin is then cooled and solidified, thereby forming the resin holder 43 which is a resin molded article.

When the molten resin cools and hardens, a molding shrinkage phenomenon usually occurs. This phenomenon occurs when the molten resin filled inside the mold is cooled and solidified, causing the volume to decrease. Accordingly, there is a possibility that a slight clearance may be formed between the first magnetic flux collecting member 41 and second magnetic flux collecting member 42, and the resin holder 43, due to the molding shrinkage phenomenon. In particular, in a case in which the resin holder 43 has a pointed shape, this portion with the pointed shape is more likely to separate from the first magnetic flux collecting member 41 and the second magnetic flux collecting member 42 than if it were a flat portion, and clearance is more likely to be formed.

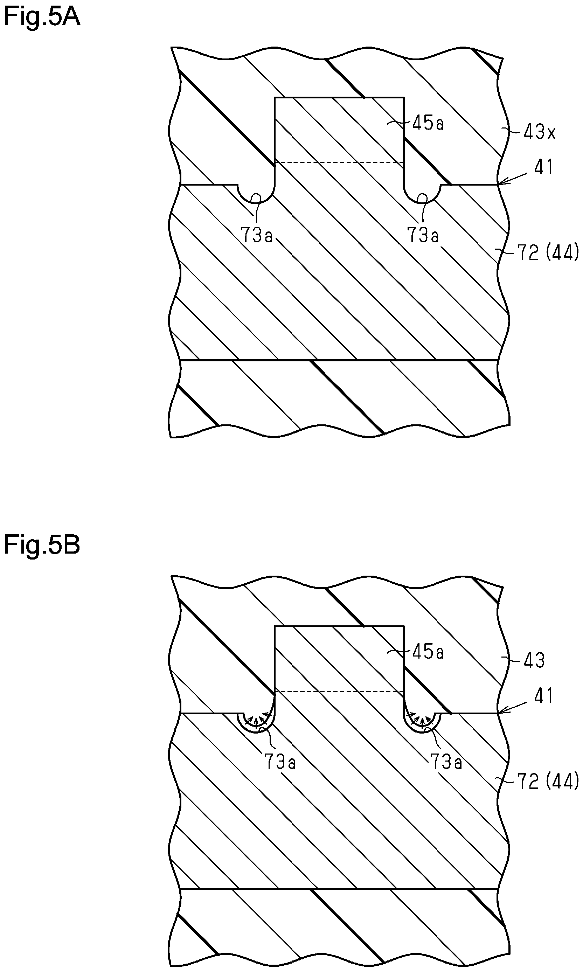

Specifically, as described above, the first claw portion 45a of the first magnetic flux collecting member 41 is bent from the first main body portion 44. Accordingly, as illustrated in FIGS. 5A and 5B, for example, when regionally viewing the vicinity of a linking portion between the first main body portion 44 and the first claw portion 45a, space filled by the resin holder 43 has a pointed shape. That is to say, the resin holder 43 has a regionally pointed shape in the vicinity of the linking portion between the first main body portion 44 and the first claw portion 45a. The first magnetic flux collecting member 41 according to the present embodiment has a first recessed portion 73a adjacent to the first claw portion 45a, which will be described layer, and accordingly the shape in the vicinity of the linking portion between the first main body portion 44 and the first claw portion 45a in the resin holder 43 tends to become even sharper. The same can be said about the linking portion between the first main body portion 44 and the first claw portion 45a, and the linking portions between the second main body portion 46 of the second magnetic flux collecting member 42 and the second claw portions 47a and 47b.

At the time of insert molding, when molten resin 43x making up the resin holder 43 is injected into a mold as illustrated in FIG. 5A for example, the molten resin 43x envelops and adheres closely to the first magnetic flux collecting member 41. However, when the molten resin 43x is cooled and solidified, the molding shrinkage phenomenon occurs as illustrated in FIG. 5B, for example, and the portion of the resin holder 43 with the pointed shape separates from the first magnetic flux collecting member 41. As a result, a clearance may be formed in the linking portion between the first main body portion 44 and the first claw portion 45a.

Taking this point into consideration, the resin holder 43 holds the first magnetic flux collecting member 41 and the second magnetic flux collecting member 42 such that the linking portions between the first main body portion 44 and the first claw portions 45a and 45b, and the connecting portions between the second main body portion 46 and the second claw portions 47a and 47b, are not exposed on an inner peripheral face of the resin holder 43. Configurations of the resin holder 43, the first magnetic flux collecting member 41, and the second magnetic flux collecting member 42 will be described in detail below.

### (Resin Holder 43)

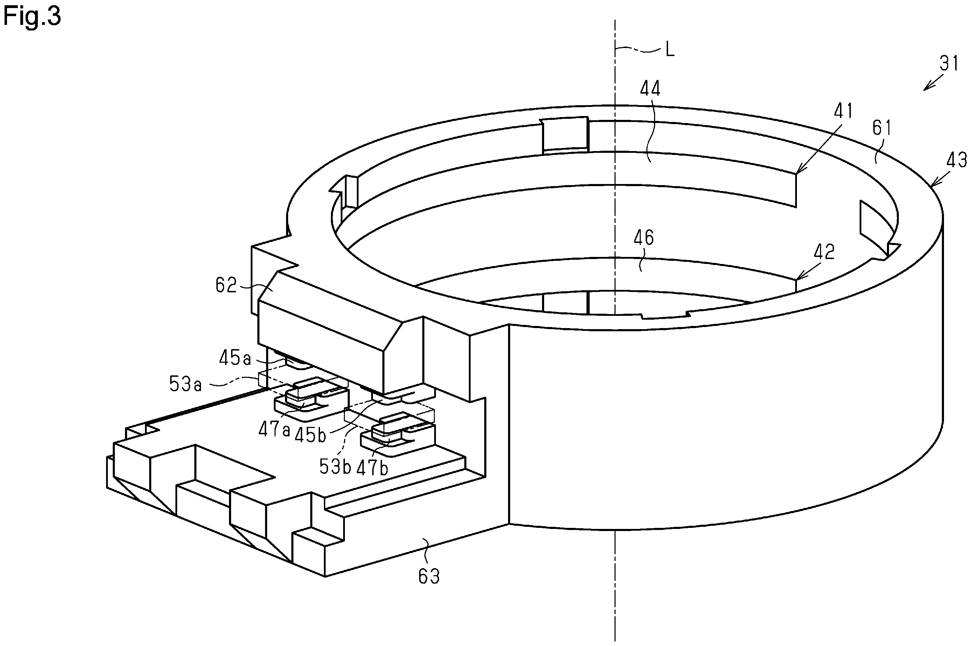

As illustrated in FIG. 2 and FIG. 3, the resin holder 43 has a holder main body 61 that is tubular, and a first support wall 62 and a second support wall 63 provided on an outer peripheral face of the holder main body 61. In the present embodiment, the holder main body 61 has a circular shape as viewed in the axial direction. The first support wall 62 protrudes outward in the radial direction from one end portion of the holder main body 61 in the axial direction. The second support wall 63 protrudes outward in the radial direction from the other end portion of the holder main body 61 in the axial direction. The first support wall 62 faces the second support wall 63 with a gap therebetween in the axial direction.

### (First Magnetic Flux Collecting Member 41)

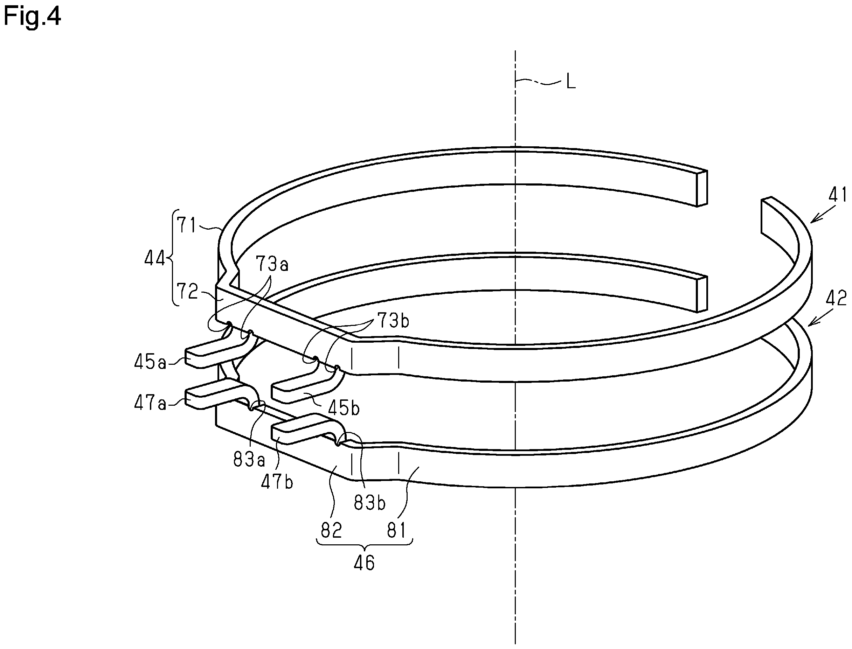

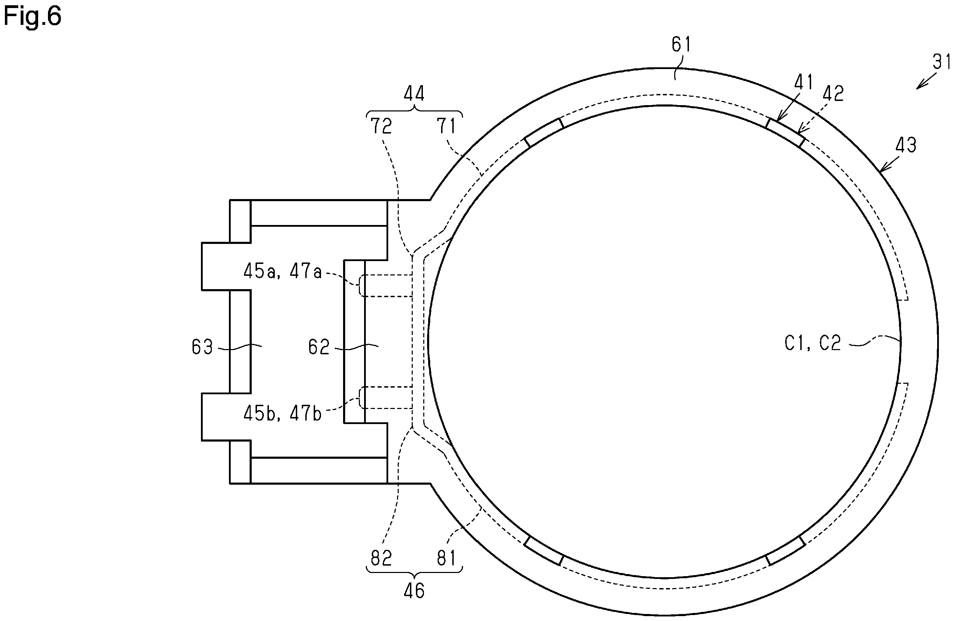

As illustrated in FIG. 4 and FIG. 6, the first magnetic flux collecting member 41 is formed by bending an elongated metal plate made of a magnetic material. That is to say, the first magnetic flux collecting member 41 is a one-piece member. The first main body portion 44 of the first magnetic flux collecting member 41 has a first arcuate portion 71 and a first protruding portion 72.

The first arcuate portion 71 has an arcuate inner peripheral face that agrees with an inner peripheral face of the holder main body 61, i.e., the inner peripheral face of the resin holder 43, as viewed in the axial direction. Now, a circle formed by extending the inner peripheral face of the first arcuate portion 71 is defined as a first imaginary circle C1. In FIG. 6, a line indicating the first imaginary circle C1 agrees with a line indicating the inner peripheral face of the resin holder 43.

The first protruding portion 72 protrudes, for example, from a middle portion of the first arcuate portion 71 in the circumferential direction toward the outer peripheral side thereof so as to be disposed on an outer peripheral side of the first imaginary circle C1. The first protruding portion 72 has connecting portions that are bent outward from end portions of the first arcuate portion 71 in the radial direction, and a straight portion that extends straight between the linking portions. The first claw portions 45a and 45b are bent outward from the straight portion of the first protruding portion 72 in the radial direction, and protrude toward the outer peripheral side of the resin holder 43. First recessed portions 73a and 73b are provided on respective sides of each of the first claw portions 45a and 45b of the first protruding portion 72. That is to say, the first main body portion 44 has the first recessed portions 73a and 73b on respective sides of the resin holder 43 in the circumferential direction thereof, at each of the linking portions with the first claw portions 45a and 45b. Each of the first recessed portions 73a and 73b extends linearly along the thickness direction of the first protruding portion 72 and opens to an inner peripheral side and an outer peripheral side of the first main body portion 44.

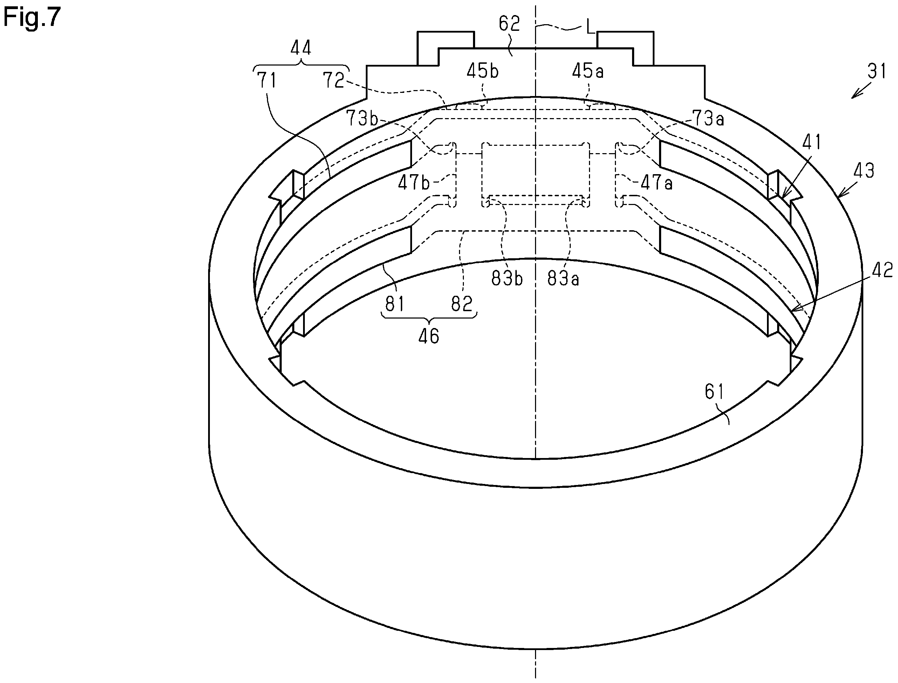

As illustrated in FIG. 6 and FIG. 7, the first magnetic flux collecting member 41 according to the present embodiment is held in the resin holder 43 in a form such that the entire inner peripheral face of the first arcuate portion 71 is exposed to the inner peripheral face of the resin holder 43, and also the entire first protruding portion 72 is embedded inside the resin holder 43. In another embodiment, a portion of the inner peripheral face of the first arcuate portion 71 may be embedded inside the resin holder 43. Also, the inner peripheral face of the first arcuate portion 71 according to the present embodiment is exposed such that there is no step therebetween with the inner peripheral face of the resin holder 43, but for example, the inner peripheral face of the first arcuate portion 71 may protrude to an inner peripheral side of the resin holder 43. Further, as long as the linking portions between the first main body portion 44 and first claw portions 45a and 45b are embedded inside the resin holder 43, a portion of the first protruding portion 72 may be exposed to the outside of the resin holder 43. As illustrated in FIG. 3, the first claw portions 45a and 45b are exposed on a face of the first support wall 62 that faces the second support wall 63.

### (Second magnetic flux collecting member 42)

As illustrated in FIG. 4 and FIG. 6, the second magnetic flux collecting member 42 has the same shape as the first magnetic flux collecting member 41, and is formed by bending an elongated metal plate made of a magnetic material. That is to say, the second magnetic flux collecting member 42 is a one-piece member. The second main body portion 46 of the second magnetic flux collecting member 42 has a second arcuate portion 81 and a second protruding portion 82.

The second arcuate portion 81 has an arcuate inner peripheral face that agrees with the inner peripheral face of the resin holder 43 as viewed in the axial direction. The second arcuate portion 81 has the same shape as the first arcuate portion 71. Now, a circle formed by extending the inner peripheral face of the second arcuate portion 81 is defined as a second imaginary circle C2. The second imaginary circle C2 agrees with the first imaginary circle C1.

The second protruding portion 82 protrudes, for example, from a middle portion of the second arcuate portion 81 in the circumferential direction toward an outer peripheral side so as to be disposed on an outer peripheral side of the second imaginary circle C2. The second protruding portion 82 has connecting portions that are bent outward from end portions of the second arcuate portion 81 in the radial direction, and a straight portion that extends straight between the linking portions. The second claw portions 47a and 47b are bent outward from the straight portion of the second protruding portion 82 in the radial direction, and protrude toward the outer peripheral side of the resin holder 43. Second recessed portions 83a and 83b are provided on respective sides of each of the second claw portions 47a and 47b of the second protruding portion 82. That is to say, the second main body portion 46 has the second recessed portions 83a and 83b on respective sides in the circumferential direction of the resin holder 43, at each of the linking portions with the second claw portions 47a and 47b. Each of the second recessed portions 83a and 83b extends linearly along the thickness direction of the second protruding portion 82 and opens to the inner peripheral side and the outer peripheral side of the second main body portion 46.

As illustrated in FIG. 6 and FIG. 7, the second magnetic flux collecting member 42 according to the present embodiment is held in the resin holder 43 in a form such that the entire inner peripheral face of the second arcuate portion 81 is exposed to the inner peripheral face of the resin holder 43, and also the entire second protruding portion 82 is embedded inside the resin holder 43. In another embodiment, a portion of the inner peripheral face of the second arcuate portion 81 may be embedded inside the resin holder 43. Also, the inner peripheral face of the second arcuate portion 81 according to the present embodiment is exposed such that there is no step therebetween with the inner peripheral face of the resin holder 43, but for example, the inner peripheral face of the second arcuate portion 81 may protrude to the inner peripheral side of the resin holder 43. Further, as long as the linking portions between the second main body portion 46 and second claw portions 47a and 47b are embedded inside the resin holder 43, a portion of the second protruding portion 82 may be exposed to the outside of the resin holder 43. As illustrated in FIG. 3, the second claw portions 47a and 47b are exposed on a face of the second support wall 63 facing the first support wall 62, so as to face the first claw portions 45a, 45b in the axial direction.

Next, functions and effects of the present embodiment will be described.
(1) The resin holder 43 holds the first magnetic flux collecting member 41 and the second magnetic flux collecting member 42 such that the linking portions between the first main body portion 44 and the first claw portions 45a and 45b, and the linking portions between the second main body portion 46 and the second claw portions 47a and 47b, are not exposed on the inner peripheral face of the resin holder 43. Accordingly, even if a clearance is formed between the linking portion of the first main body portion 44 with the first claw portion 45a, and the resin holder 43, for example, due to the molding shrinkage phenomenon, a clearance is less likely to be formed on the inner peripheral face of the resin holder 43. Accordingly, any liquid entering the resin holder 43 can be suppressed from reaching the magnetic sensors 53a and 53b.
(2) The first main body portion 44 has the first arcuate portion 71 and the first protruding portion 72. The circle formed by extending the first arcuate portion 71 is the first imaginary circle C1. The first protruding portion 72 protrudes from the first arcuate portion 71 so as to be disposed on the outer peripheral side of the first imaginary circle C1. The first claw portions 45a and 45b protrude from the first protruding portion 72 to the outer peripheral side of the resin holder 43. The resin holder 43 holds the first magnetic flux collecting member 41 such that the first arcuate portion 71 is exposed on the inner peripheral face of the resin holder 43 and also the first protruding portion 72 is embedded inside the resin holder 43.
   According to the above configuration, the first arcuate portion 71, which is part of the first main body portion 44, can be exposed to the inner peripheral face of the resin holder 43 without exposing the linking portions between the first main body portion 44 and first claw portions 45a and 45b to the inner peripheral face of the resin holder 43. Accordingly, the first main body portion 44 can be disposed closer to the first yoke core 21 as compared to a case when the entire first main body portion 44 is embedded inside the resin holder 43, for example, and decrease in the magnetic flux flowing through the first magnetic flux collecting member 41 can be suppressed. This enables the absolute value of the magnetic flux detected by the magnetic sensors 53a and 53b to be suppressed from becoming smaller, thereby suppressing decrease in anti-noise capabilities.
(3) The second main body portion 46 has a second arcuate portion 81 and a second protruding portion 82. The circle formed by extending the second arcuate portion 81 is the second imaginary circle C2. The second protruding portion 82 protrudes from the second arcuate portion 81 so as to be disposed on the outer peripheral side of the second imaginary circle C2. The second claw portions 47a and 47b protrude from the second protruding portion 82 to the outer peripheral side of the resin holder 43. The resin holder 43 holds the second magnetic flux collecting member 42 such that the second arcuate portion 81 is exposed on the inner peripheral face of the resin holder 43 and also the second protruding portion 82 is embedded inside the resin holder 43.
   According to the above configuration, the same effect as in (2) above can also be obtained for the second magnetic flux collecting member 42, as well. This enables the absolute value of the magnetic flux detected by the magnetic sensors 53a and 53b to be suppressed from becoming smaller, thereby suppressing decrease in anti-noise capabilities.
(4) Each of the first magnetic flux collecting member 41 and the second magnetic flux collecting member 42 is a one-piece member. Accordingly, an increase in the number of parts can be suppressed as compared to, for example, a case in which the magnetic flux collecting member is formed by joining a plurality of parts.
(5) The first main body portion 44 has the first recessed portions 73a and 73b on respective sides in the circumferential direction of the resin holder 43 at the linking portions with the first claw portions 45a and 45b. The second main body portion 46 has the second recessed portions 83a and 83b on respective sides in the circumferential direction of the resin holder 43 at the linking portions with the second claw portions 47a and 47b.

In the above configuration, the first recessed portions 73a and 73b are provided in the first main body portion 44 (strictly speaking, the first protruding portion 72), and accordingly when the first claw portions 45a, 45b are bent, the first main body portion 44 can be suppressed from being pulled by the first claw portions 45a, 45b and being bent. This facilitates bending work of the first claw portions 45a and 45b. Similarly, this facilitates bending work of the second claw portions 47a and 47b.

However, since the first magnetic flux collecting member 41 has the first recessed portions 73a, 73b in this way, the shapes in the vicinity of the linking portions between the first main body portion 44 and first claw portions 45a and 45b in the resin holder 43 tends to become even sharper (see FIG. 5A and FIG. 5B). The same can be said for the second magnetic flux collecting member 42. Accordingly, it is very effective to adopt a configuration in which the linking portions between the first main body portion 44 and first claw portions 45a and 45b, and the linking portions between the second main body portion 46 and second claw portions 47a and 47b, are not exposed to the inner peripheral face of the resin holder 43.

(6) The first magnetic flux collecting member 41 has the same shape as the second magnetic flux collecting member 42. Accordingly, the manufacturing costs thereof can be reduced as compared to a case when the first magnetic flux collecting member 41 and the second magnetic flux collecting member 42 have different shapes.

The present embodiment can be carried out modified as follows. The present embodiment and the following modifications can be carried out combined as long as no technical contradiction arises.
- The first magnetic flux collecting member 41 does not have to have the first recessed portions 73a and 73b. Similarly, the second magnetic flux collecting member 42 does not have to have the second recessed portions 83a and 83b.
- The first magnetic flux collecting member 41 does not have to be a one-piece member. For example, the members making up the first claw portions 45a and 45b may be joined separately to the member making up the first main body portion 44. Similarly, the second magnetic flux collecting member 42 does not have to be a one-piece member.
- The shape of the first main body portion 44 can be changed as appropriate. For example, the first main body portion 44 may have just the first arcuate portion 71, and not have the first protruding portion 72. In this case, for example, the resin holder 43 holds the first magnetic flux collecting member 41 in an eccentric state from the axial line L, such that the linking portions between the first main body portion 44 (first arcuate portion 71) and the first claw portions 45a and 45b are not exposed on the inner peripheral face of the resin holder 43. Also, the first arcuate portion 71 may have an arcuate inner peripheral face that does not agree with the inner peripheral face of the resin holder 43 as viewed in the axial direction, for example. Further, the first protruding portion 72 may not have a straight portion, for example, and the entire first protruding portion 72 may be curved. Similarly, the shape of the second main body portion 46 can be changed as appropriate.
- The first magnetic flux collecting member 41 may have just one first claw portion. Similarly, the second magnetic flux collecting member 42 may have just one second claw portion.
- The first magnetic flux collecting member 41 may have a different shape from the second magnetic flux collecting member 42.
- The first main body portion 44 may face the first yoke core 21 in the axial direction. In this case, the first main body portion 44 may be, for example, in the form of a flat plate, and the shape thereof can be changed as appropriate. Similarly, the second magnetic flux collecting member 42 may face the second yoke core 22 in the axial direction.
- The resin holder 43 may have just the holder main body 61, without having the first support wall 62 and the second support wall 63.
- The rotating shaft 2 may be, for example, a shaft other than a pinion shaft, such as a column shaft or the like. That is to say, the sensor device 1 may be provided around the column shaft.
- The sensor device 1 does not have to include the outer case 32. Also, the sensor device 1 does not need to include the circuit board 33, as long as the magnetic sensors 53a and 53b are included therein. Further, the sensor device 1 may be provided with just one magnetic sensor.
- The sensor device 1 may be configured to detect a rotation angle of the rotating shaft 2, in addition to the torque. In this case, the sensor device 1 further includes a main gear provided on, for example, the magnetic yoke assembly 12, and one or more driven gears meshing with the main gear. The rotation angle of the rotating shaft 2 can then be detected based on a rotation angle of the driven gear.
- Although the sensor magnet 11 is fixed to the input shaft 3 and the magnetic yoke assembly 12 is fixed to the output shaft 5 in the above, the sensor magnet 11 may be fixed to the output shaft 5 and the magnetic yoke assembly 12 may be fixed to the input shaft 3.

## Claims

1. A sensor device comprising:
a sensor magnet configured to rotate integrally with a first shaft;
a first yoke core and a second yoke core configured to rotate integrally with a second shaft linked to the first shaft via a torsion bar;
a magnetic flux collector assembly including a first magnetic flux collecting member disposed with a gap as to the first yoke core, a second magnetic flux collecting member disposed with a gap as to the second yoke core, and a resin holder that is tubular; and
a magnetic sensor that generates a signal in accordance with a magnetic flux flowing through the first magnetic flux collecting member and the second magnetic flux collecting member, wherein
the first magnetic flux collecting member has a first main body portion facing the first yoke core and a first claw portion that is bent from the first main body portion and that protrudes toward an outer peripheral side of the resin holder,
the second magnetic flux collecting member has a second main body portion facing the second yoke core and a second claw portion that is bent from the second main body portion and that protrudes toward the outer peripheral side of the resin holder,
the magnetic sensor is disposed on the outer peripheral side of the resin holder, between the first claw portion and the second claw portion, and
the resin holder holds the first magnetic flux collecting member and the second magnetic flux collecting member such that at least a linking portion between the first main body portion and the first claw portion, and a linking portion between the second main body portion and the second claw portion, are not exposed on an inner peripheral face of the resin holder.

2. The sensor device according to claim 1, wherein:
the first main body portion has a first arcuate portion and a first protruding portion;
a circle formed by extending an inner peripheral face of the first arcuate portion is a first imaginary circle;
the first protruding portion protrudes from the first arcuate portion so as to be disposed on an outer peripheral side of the first imaginary circle;
the first claw portion protrudes from the first protruding portion toward the outer peripheral side of the resin holder; and
the resin holder holds the first magnetic flux collecting member such that the first arcuate portion is exposed to the inner peripheral face of the resin holder, and also the first protruding portion is embedded inside the resin holder.

3. The sensor device according to claim 1 or 2, wherein:
the second main body portion has a second arcuate portion and a second protruding portion;
a circle formed by extending an inner peripheral face of the second arcuate portion is a second imaginary circle;
the second protruding portion protrudes from the second arcuate portion so as to be disposed on an outer peripheral side of the second imaginary circle;
the second claw portion protrudes from the second protruding portion toward the outer peripheral side of the resin holder; and
the resin holder holds the second magnetic flux collecting member such that the second arcuate portion is exposed to the inner peripheral face of the resin holder, and also the second protruding portion is embedded inside the resin holder.

4. The sensor device according to any one of claims 1 to 3, wherein the first magnetic flux collecting member and the second magnetic flux collecting member are each a one-piece member.

5. The sensor device according to any one of claims 1 to 4, wherein:
the first main body portion has a first recessed portion on both sides in a circumferential direction of the resin holder, at the linking portion with the first claw portion; and
the second main body portion has a second recessed portion on both sides in the circumferential direction of the resin holder, at the linking portion with the second claw portion.

## Amended claims

### Amended claims under Art. 19.1 PCT

1. (Amended) A sensor device comprising:
a sensor magnet configured to rotate integrally with a first shaft;
a first yoke core and a second yoke core configured to rotate integrally with a second shaft linked to the first shaft via a torsion bar;
a magnetic flux collector assembly including a first magnetic flux collecting member disposed with a gap as to the first yoke core, a second magnetic flux collecting member disposed with a gap as to the second yoke core, and a resin holder that is tubular; and
a magnetic sensor that generates a signal in accordance with a magnetic flux flowing through the first magnetic flux collecting member and the second magnetic flux collecting member, wherein
the first magnetic flux collecting member has a first main body portion facing the first yoke core and a first claw portion that is bent from the first main body portion and that protrudes toward an outer peripheral side of the resin holder,
the second magnetic flux collecting member has a second main body portion facing the second yoke core and a second claw portion that is bent from the second main body portion and that protrudes toward the outer peripheral side of the resin holder,
the magnetic sensor is disposed on the outer peripheral side of the resin holder, between the first claw portion and the second claw portion,
the resin holder holds the first magnetic flux collecting member and the second magnetic flux collecting member such that at least a linking portion between the first main body portion and the first claw portion, and a linking portion between the second main body portion and the second claw portion, are not exposed on an inner peripheral face of the resin holder,
the first main body portion has a first arcuate portion and a first protruding portion,
a circle formed by extending an inner peripheral face of the first arcuate portion is a first imaginary circle,
the first protruding portion protrudes from the first arcuate portion so as to be disposed on an outer peripheral side of the first imaginary circle,
the first claw portion protrudes from the first protruding portion toward the outer peripheral side of the resin holder, and
the resin holder holds the first magnetic flux collecting member such that the first arcuate portion is exposed to the inner peripheral face of the resin holder, and also the first protruding portion is embedded inside the resin holder.

2. (Amended) The sensor device according to claim 1, wherein:
the second main body portion has a second arcuate portion and a second protruding portion;
a circle formed by extending an inner peripheral face of the second arcuate portion is a second imaginary circle;
the second protruding portion protrudes from the second arcuate portion so as to be disposed on an outer peripheral side of the second imaginary circle;
the second claw portion protrudes from the second protruding portion toward the outer peripheral side of the resin holder; and
the resin holder holds the second magnetic flux collecting member such that the second arcuate portion is exposed to the inner peripheral face of the resin holder, and also the second protruding portion is embedded inside the resin holder.

3. (Amended) The sensor device according to claim 1 or 2, wherein the first magnetic flux collecting member and the second magnetic flux collecting member are each a one-piece member.

4. (Amended) The sensor device according to any one of claims 1 to 3, wherein:
the first main body portion has a first recessed portion on both sides in a circumferential direction of the resin holder, at the linking portion with the first claw portion; and
the second main body portion has a second recessed portion on both sides in the circumferential direction of the resin holder, at the linking portion with the second claw portion.

5. (Canceled)
